# EUROPÄISCHE PATENTSCHRIFT

(11) **EP 2 640 622 B1**
(45) Veröffentlichungstag und Bekanntmachung des Hinweises auf die Patenterteilung: **15.02.2017**
(21) Anmeldenummer: 11770379.3
(22) Anmeldetag: 13.10.2011
(51) Int. Cl.: B62D 1/16, B21C 23/18, B62D 1/20, F16C 3/03, B62D 1/185

(54) **SCHIEBEHÜLSENROHLING UND KRAFTFAHRZEUG-LENKSPINDELANORDNUNG MIT AUS DEM ROHLING GEFERTIGTER SCHIEBEHÜLSE**
SLIDING SLEEVE BLANK AND MOTOR VEHICLE STEERING SPINDLE ASSEMBLY HAVING A SLIDING SLEEVE MADE FROM THE BLANK
ÉBAUCHE DE MANCHON COULISSANT ET SYSTÈME DE COLONNE DE DIRECTION DE VÉHICULE À MOTEUR COMPORTANT UN MANCHON COULISSANT FABRIQUÉ À PARTIR DE LADITE ÉBAUCHE

(30) Priorität: 21.10.2010 DE 102010049106
(43) Veröffentlichungstag der Anmeldung: 25.09.2013
(73) Patentinhaber: Daimler AG, 70327 Stuttgart (DE)
(72) Erfinder: HEBENSTREIT, Axel, 70569 Stuttgart (DE); SCHWIEGER, Marco, 21147 Hamburg (DE)
(74) Vertreter: JENSEN & SON
(86) Internationale Anmeldenummer: PCT/EP2011/005147
(87) Internationale Veröffentlichungsnummer: WO 2012/052135

(56) Entgegenhaltungen:
- GB-A- 2 167 165
- GB-A- 2 296 071
- US-A1- 2005 194 775

## Beschreibung

Die vorliegende Erfindung bezieht sich auf Schiebehülsenrohlinge, die dazu geeignet sind, daraus Schiebehülsen für Lenkspindelwellen von Kraftfahrzeuglenkspindelanordnungen zu schaffen und die KraftfahrzeugLenkspindelanordnungen selbst.

Bekannte Lenkspindelanordnungen weisen eine Lenkspindelwelle, die einen Wellenabschnitt mit einer endseitigen Außenverzahnung aufweist, und eine Schiebehülse auf, die über einen Großteil ihrer Länge eine Innenverzahnung hat. Die Innenverzahnung der Schiebehülse ist in der Lenkspindelanordnung mit der Außenverzahnung der Lenkspindelwelle verschiebbar verzahnt. Um eine möglichst unmittelbare Lenkmomentübertragung der Lenkspindel zu erreichen und zugleich eine Verbindung zwischen Schiebehülse und Lenkspindelwelle zu schaffen, die im Betrieb geräuscharm funktioniert, ist die Lenkspindelwelle üblicher Weise mit Kunststoff umspritzt.

Es ist bekannt, die Verzahnung der Schiebehülse durch Hämmern herzustellen, da hierdurch eine hochpräzise Gestaltung der Zahnung erreicht werden kann. Beim Hämmern wird in die hohle Schiebehülse ein Dorn mit verzahnter Kontur eingeschoben, anschließend wird die Hülse von außen radial mit Hämmern bearbeitet, wobei die Innenkontur der Hülse die Verzahnungskontur des Doms annimmt, während sich zugleich der Querschnitt der Hülse verringert. Die Außenkontur der Hülse bleibt glatt.

Derartige Schiebehülsen sind an ihrem in montiertem Zustand Richtung Torsionsdämpfer weisenden Ende aus konstruktiven Gründen mit einem Bund ausgestattet, an dessen Anschluss flügelartige Stege vorgesehen sind, mittels derer die Hülse in entsprechende Aussparungen des sich an einem Ende der Lenkspindelanordnung befindenden Torsionsdämpfers eintaucht. Dadurch nimmt die Hülse eine definierte Winkellage an.

Der Bund, der an dem Torsionsdämpfer einen Anschlag bildet, liegt in dem Abschnitt, bis zu dessen Ansatz die Bearbeitung mittels Hämmern ausgeführt werden kann. In dem Bereich, in dem die Flügel und der Bund vorliegen, können keine Hämmer von außen einwirken.

Damit ist der durch die vorstehend beschriebene Verzahnung entstehende Schiebesitz hinsichtlich des Schiebewegs begrenzt. Dies ist deshalb nachteilig, da beim Einbau des Motors ins Fahrzeug die Lenkspindel möglichst weit zurückgezogen werden soll, damit sie nicht mit dem Motor kollidiert. Dabei muss zugleich die Drehwinkelposition erhalten bleiben, damit eine ungehinderte Montage der Lenkspindel am Lenkgetriebe stattfinden kann.

Ist die Lenkspindel jedoch entsprechend zurückgezogen, so kann diese Anforderung nicht erfüllt werden, da auf Grund der fehlenden Innenverzahnung an dem einen Ende der Schiebehülse die Lenkspindel frei drehbar ist.

Grundsätzlich können hohlzylindrische Präzisionsteile aus Metall statt durch Hämmern im Kaltfließpressverfahren umgeformt werden. Ein derartiges Verfahren wird in der DE 10 2005 033 188 A1 offenbart. Dort wird als Ausgangsmaterial ein Stangenmaterial verwendet und es wird nach dem Ablängen desselben ein Rohbauteil hergestellt, das an der äußeren Mantelfläche abgedreht und mit einer Innenbohrung versehen wird. Durch Kaltfließpressen wird das Rohteil mit einer gewünschten Innen- und Außengeometrie umgeformt und es wird eine Außenverzahnung bereitgestellt.

GB 2 167 165 A offenbart Schiebehülsenrohling zur Fertigung einer Schiebehülse für eine Lenkspindelwelle einer Kraftfahrzeug-Lenkspindel, wobei der Schiebehülsenrohling eine zylindrische Form aufweist und an einem Ende einen Abschnitt aufweist, wobei, der Schiebehülsenrohling ein Kaltfliesspressbauteil ist, das an dem Abschnitt eine sich über einen Teil der Länge des Abschnitts erstreckende Vorverzahnung aufweist.

Eine längenveränderbare Lenkspindel, die das Zurückziehen derselben bei der Motormontage ermöglicht, wird auch in der DE 19 750 005 C1 offenbart: Dort weist die längenveränderbare Lenkspindel wenigstens zwei koaxial angeordnete, axial verschiebbare Rohrstücke auf, wobei eines davon zur Übertragung eines Drehmoments formschlüssig gefasst ist. Die äußeren und inneren Umfangskonturen des inneren bzw. äußeren Profils sind durch bogenförmige Abschnitte alternierender Krümmungsradien gebildet; zwischen den beiden Profilen liegt ein umlaufender Spaltraum vor. In dem Spaltraum ist eine aus makromolekularem Material gefertigte Gleithülse aufgenommen, die entlang ihrer Umgangskontur an den den Spaltraum begrenzenden Wandungen der Profile nur abschnittsund wechselweise anliegt. Die Gleithülse liegt abwechselnd an konvexen Abschnitten des inneren Profils und an konkaven Abschnitten des äußeren Profils an.

Ausgehend von diesem Stand der Technik ergibt sich die Aufgabe, eine konstruktiv einfach und günstig zu fertigende Lenkspindelanordnung zu schaffen, die dennoch bei axialer Verschiebung der Lenkspindel an der Schiebehülse eine Drehwinkelpositionsbeibehaltung der Spindel am Lenkgetriebe erlaubt.

Die für die Lösung dieser Aufgabe benötigte Schiebehülse wird durch einen Schiebehülsenrohling mit den Merkmalen des Anspruchs 1 bereitgestellt.

Die Aufgabe der Bereitstellung einer verbesserten Lenkspindelanordnung wird durch die Vorrichtung mit den Merkmalen des Anspruchs 2 gelöst.

Weiterbildungen der erfindungsgemäßen Lenkspindelanordnung sind in den Unteransprüchen ausgeführt.

Um eine erfindungsgemäße Kraftfahrzeug-Lenkspindelanordnung zu realisieren, wird erfindungsgemäß zunächst ein Schiebehülsenrohling dargestellt, der es erlaubt, eine Schiebehülse für eine Lenkspindelwelle einer Kraftfahrzeug-Lenkspindelanordnung bereitzustellen. Der Rohling hat eine zylindrische Form und weist an seinem einen Ende einen Abschnitt auf, der einen umlaufenden Bund und sich von dem Bund bis zum Ende der Hülse radial weg erstreckende Flügelstege umfasst.

Der erfindungsgemäße Schiebehülsenrohling ist nun ein Kaltfließpressbauteil, das unmittelbar bei der Fertigung eine Innenverzahnung erhalten hat, die sich über einen Teil der Länge des vorgenannten Abschnitts erstreckt. Dieser Abschnitt ist gerade jener, der der hämmernden Bearbeitung nicht zugänglich ist.

So wird durch den erfindungsgemäßen Schiebehülsenrohling nunmehr ein Bauteil bereitgestellt, das bei der weiteren Bearbeitung mittels Hämmern auf bekannte Weise zu einer Schiebehülse, die eine weitere, gehämmerte Verzahnung aufweist, umgeformt werden kann.

Die aus dem erfindungsgemäß gefertigten Schiebehülsenrohling dargestellte Schiebehülse weist daher nunmehr zwei Innenverzahnungen auf: Eine erste, die sich von dem einen der Schiebehülse, bis hin zu dem den Bund aufweisenden Abschnitt erstreckt, wobei diese Innenverzahnung durch Hämmern hergestellt wird, und eine zweite, sogenannte Vorverzahnung, die in dem Abschnitt vorliegt, der an das zweite Ende angrenzt. So ist eine Schiebehülse geschaffen worden, die nahezu über ihre gesamte Länge eine Innenverzahnung aufweist und die es insofern ermöglicht, einen längeren geführten Schiebeweg für eine Lenkspindelwelle bereitzustellen.

Eine erfindungsgemäße Kraftfahrzeug-Lenkspindelanordnung umfasst eine derartige Lenkspindelwelle mit Außenverzahnung, die Teil der Lenkspindel ist, und eine Schiebehülse, in der die Lenkspindelwelle axial verschiebbar aufgenommen werden kann. Die Schiebehülse ist vorteilhaft aus einem erfindungsgemäßen Schiebehülsenrohling gefertigt und weist daher die bekannte gehämmerte Innenverzahnung auf, die sich von dem einen, ersten Ende der Schiebehülse in Richtung eines nahe an dem zweiten Ende des vorliegenden Abschnitts erstreckt, der den Bund und die sich radial weg erstreckenden Flügelstege aufweist. In einer Einbaulage der Lenkspindelanordnung ist die gehämmerte Innenverzahnung mit der Außenverzahnung der Lenkspindelwelle in Schiebeeingriff.

Weiter weist die erfindungsgemäße Lenkspindelwelle über einen Teil der Länge des genannten Abschnitts eine erfindungsgemäße Vorverzahnung auf, die in einer Montageposition der Lenkspindelwelle mit der Außenverzahnung verzahnt ist. Dabei kann eine Drehwinkelposition, die die Lenkspindelwelle bei der Einbaulage durch die Verzahnung eingenommen hat, bzw. mit der die Lenkspindelwelle positioniert wurde, durch das Überführen der Lenkspindelwelle von der gehämmerten Innenverzahnung in die Vorverzahnung beibehalten werden.

Die Länge der Außenverzahnung der Lenkspindelwelle kann vorteilhaft so gewählt sein, dass die Lenkspindelwelle beim Überführen von der Einbaulage in die Montageposition ununterbrochen durch die gehämmerte Innenverzahnung und durch die Vorverzahnung der Schiebehülse geführt ist.

Die Außenverzahnung der Lenkspindelwelle kann durch eine Kunststoffumspritzung bereitgestellt sein.

Weiter kann die Vorverzahnung der Lenkspindelwelle eine derartige Zahngröße aufweisen, dass ein Toleranzausgleichsspalt zwischen der Vorverzahnung und der Außenverzahnung in der Montageanordnung bereitgestellt wird. Hierdurch werden Fertigungstoleranzen, wie sie insbesondere durch das Kaltfließpressverfahren entstehen, ausgeglichen.

Eine weitere Möglichkeit zum Ausgleich von Fertigungstoleranzen kann dadurch geschaffen werden, dass die Verzahnung im gehämmerten Bereich einen Fehlzahn in der Schiebehülse aufweist. Im gehämmerten Bereich kann dann die Lenkspindelwelle einen Blockzahn aufweisen. Im Vorverzahnungsbereich der Schiebehülse hingegen liegt lediglich ein Fehlzahn vor.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigt:
- Fig. 1: eine Längsschnittansicht eines erfindungsgemäßen Schiebehülsenrohlings,
- Fig. 2: eine Längsschnittansicht einer erfindungsgemäßen Schiebehülse,
- Fig. 3: eine Längsansicht der erfindungsgemäßen Schiebehülse,
- Fig. 4: eine Längsschnittansicht einer erfindungsgemäßen Schiebehülse, in die eine Lenkspindelwelle eingeführt ist,
- Fig. 5a: eine perspektivische Draufsicht auf die Verzahnung der Schiebehülse im gehämmerten Bereich,
- Fig. 5b: eine perspektivische Draufsicht auf die Vorverzahnung,
- Fig. 5c: eine Detailansicht aus Fig. 5b.

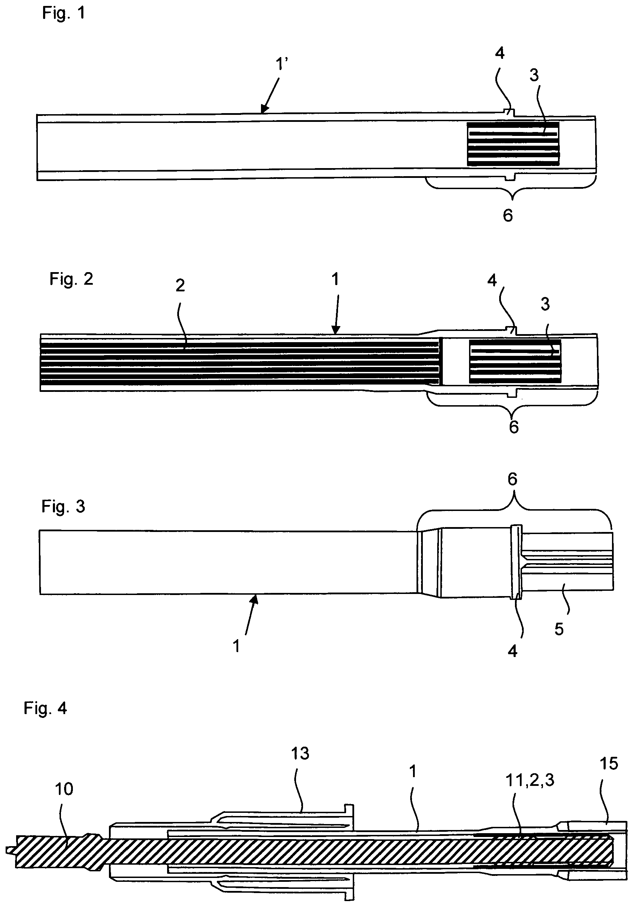

Fig. 1 zeigt einen erfindungsgemäßen Schiebehülsenrohling 1', der dazu geeignet ist, zu einer Schiebehülse 1, wie sie etwa in Fig. 1 in einer Seitenschnittsansicht und in Fig. 2 in der Seitenansicht dargestellt ist, weiter verarbeitet zu werden. Der Schiebehülsenrohling ist ein Kaltfließpressbauteil, der als Hohlzylinder gestaltet ist und an seinem einen Ende einen Abschnitt aufweist, in dem ein Bund 4 vorgesehen ist, von dem aus bis hin zum Ende sich Flügelstege 5, wie gezeigt in Fig. 3, radial weg erstrecken.

Mittels der Flügelstege taucht die fertige Hülse, wie sie in den Fig. 2 bis 4 gezeigt ist, in den in Fig. 4 angedeuteten Torsionsdämpfer 15 ein. Dazu sind im Torsionsdämpfer 15 entsprechende Aussparungen vorgesehen, die mit den flügelartigen Stegen 5 in Eingriff gebracht werden, wodurch die Hülse 1 eine definierte Winkellage annimmt. Der Bund 4 bildet dabei einen Anschlag am Torsionsdämpfer, wie in Fig. 4 ebenfalls angedeutet ist.

Die Schiebehülse 1 selbst weist, wie aus dem Stand der Technik bereits bekannt, eine gehämmerte Innenverzahnung 2 auf, die wie folgt in den Schiebehülsenrohling 1' eingebracht wird: Mittels des bekannten Hämmerverfahrens kann die Innenverzahnung 2 hochgenau hergestellt werden, indem in den hohlen Schiebehülsenrohling 1' ein Dorn mit verzahnter Kontur eingeschoben wird. Nun kann der Rohling 1' radial von außen mit Hämmern bearbeitet werden, wobei die Innenkontur der Hülse die Verzahnungskontur des Dorns annimmt. Dabei verringert sich der Querschnitt des Rohlings 1' und nimmt die Form der fertigen Hülse 1 an, wie in Fig. 2, 3 und 4 gezeigt. Aus konstruktiven Gründen ergibt sich beim Hämmern ein Übergangsbereich, so dass sich der nunmehr durch das Hämmern verjüngte Querschnitt der Hülse 1 in Richtung des Bundes 4 geringfügig trichterförmig aufweitet.

Dieser Bereich des Übergangs, über den Bund hin bis zu dem Ende der Hülse 1', die die flügelartigen Stege 5 trägt, wird nachfolgend als Abschnitt 6 bezeichnet. In diesem Abschnitt kann mittels Hämmern keine Innenverzahnung hergestellt werden. Daher wird erfindungsgemäß der Schiebehülsenrohling 1' unmittelbar als Kaltfließpressbauteil hergestellt, das an dem Abschnitt 6 eine sich über den größten Teil der Länge des Abschnitts 6 erstreckende Vorverzahnung 3, aufweist. Der Begriff "Vorverzahnung" drückt aus, dass diese erste Verzahnung 3 vor der gehämmerten Innenverzahnung 2 hergestellt wurde.

Damit kann erfindungsgemäß eine Hülse 1 hergestellt werden, die nahezu über ihre gesamte Länge eine Innenverzahnung 2,3 aufweist, wobei sich ein verlängerter Schiebesitz 11,2,3 der erfindungsgemäßen Lenkspindelanordnung ergibt, bei dem die Lenkspindelwelle 10, siehe Fig. 4, in die Schiebehülse 1, die ein Abschnitt der Lenkspindel ist und eine Außenverzahnung 11 aufweist, axial verschiebbar in den Abschnitt mit der gehämmerten Innenverzahnung 2 der Schiebehülse 1 eingeführt ist.

Die Bedeutung dieses verbesserten Schiebewegs ergibt sich daraus, dass beim Einbau des Motors ins Fahrzeug zur Vermeidung einer Kollision der Lenkspindel mit dem Motor, die Lenkspindel möglichst weit zurückgeschoben werden soll. Die voreingestellte, bestimmte Drehwinkelposition der Lenkspindel muss jedoch für eine ungehinderte Montage der Spindel am Lenkgetriebe erhalten bleiben. Dies kann nur gewährleistet werden, wenn die Lenkspindelwelle in der Schiebehülse jederzeit geführt ist. Diese Anforderung wird durch die erfindungsgemäße Kraftfahrzeug-Lenkspindelanordnung erreicht, die eine Schiebehülse 1 mit nahezu durchgängiger Innenverzahnung 2,3 bereitstellt. So ist die Lenkspindel nach Einführen in die Schiebehülse 1 zu keinem Zeitpunkt mehr frei drehbar. Es ist dabei denkbar, dass die Innenverzahnung 3 in einer einfachen Bauweise aus jeweils zwei einander diametral gegenüberliegenden Zähne besteht, wobei die Zähne jedes Paars relativ nahe beieinander stehen, so dass jeweils ein Zahn der Außenverzahnung 11 mit Spiel in die Zahnlücke zwischen den beiden Zähnen eingreifen kann.

Dies ergibt sich, da in einer Einbaulage der Lenkspindelanordnung die gehämmerte Innenverzahnung 2 mit der Außenverzahnung 11 der Lenkspindelwelle 10 verzahnt wird und dass bei Überführung in die Montageposition des Motors, in der die zurückgezogene Lenkspindelwelle in der Schiebehülse 1 in Richtung Torsionsdämpfer 15 geschoben wird, die Lenkspindelwelle 10 unmittelbar von der gehämmerten Innenverzahnung 2 der Schiebehülse 1 in die Vorverzahnung 3 weitergeschoben wird. Sie hat damit einen verlängerten Schiebeweg, bei dem zugleich eine gesicherte Führung gegeben ist. Eine gewünschte Schiebewegbegrenzung kann etwa, wie dem Fachmann bekannt ist, durch die Anordnung eines Montagestopprings, der umfänglich um die Lenkspindelwelle angeordnet ist, geschaffen werden.

Wie Fig. 4 weiter zeigt, ist die Hülse 1 lokal von einem Dichtring 13 umgeben, auf welchem eine Manschette gleitend sitzt, die den Durchtritt der Lenkspindelanordnung durch die Stirnwand des Kraftfahrzeug-Cockpits gegen Motorabwärme und Schall abdichtet.

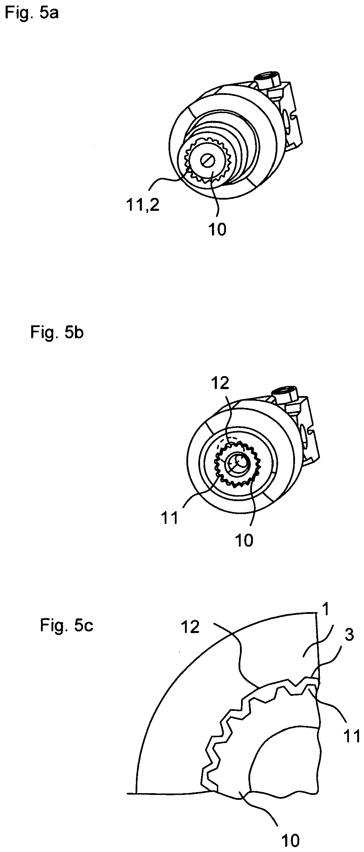

Fig. 5 zeigt den gehämmerten Innenverzahnungsbereich der Schiebehülse 1, die vorliegend einen Fehlzahn 12 aufweist, um ein gewisses Spiel zum Ausgleich von Fertigungstoleranzen bereitzustellen. Als korrespondierendes Element zu dem Fehlzahn kann auf der Lenkspindelwelle 1 ein Blockzahn, figurativ nicht gezeigt, vorgesehen sein. Insofern, als die Lenkspindelwelle 1 eine Kunststoffumspritzung aufweist, die auch die Zahnung bereitstellen kann, kann der Blockzahn aus Kunststoff ausgeführt sein. Eine derartige Kunststoffumspritzung ist insbesondere vorteilhaft, um das Lenkmoment möglichst direkt zu übertragen und um eine möglichst geräuscharme Verbindung zwischen Lenkspindel und Schiebehülse herzustellen.

Wie Fig. 5b weiter zeigt, kann in dem Bereich der Vorverzahnung ebenfalls ein Fehlzahn 12 in der Schiebehülse 1 vorliegen. Hiermit und durch eine größere Verzahnung 3 in Abschnitt 6, können Fertigungstoleranzen ausgeglichen werden, was daher erforderlich sein kann, da die Kaltumformung des Schiebehülsenrohlings als Kaltfließpressbauteil gegebenenfalls eine Vorverzahnung ergibt, die weniger präzise gefertigt ist als die durch Hämmern geschaffene Innenverzahnung.

Die Detailansicht in Fig. 5b zeigt, dass sich durch entsprechend gewählte Zahngrößen 3,11 in der Schiebehülse 1 und dem damit entstehenden Toleranzausgleichspalt, der trotz der sicheren Führung, die er immer noch bereitstellt, ein gewisses Spiel ergibt, um die genannten Fertigungstoleranzen abzupuffern.

So wird nun mit der erfindungsgemäßen Kraftfahrzeug-Lenkspindelanordnung beim Überführen der Lenkspindel von der Einbaulage in die Montageposition zu jeder Zeit ein Erhalt der gewünschten Drehwinkelposition gesichert.

Ferner unterstützt der erfindungsgemäß verlängerte Schiebeweg den Ausgleich von Fahrzeugtoleranzen, so dass im Fahrbetrieb kleinere Bewegungen ausgeglichen werden können.

## Patentansprüche

1. Schiebehülsenrohling (1') zur Fertigung einer Schiebehülse (1) für eine Lenkspindelwelle (10) einer Kraftfahrzeug-Lenkspindel, wobei der Schiebehülsenrohling (1') eine zylindrische Form aufweist und an einem Ende einen Abschnitt (6) aufweist, der einen Bund (4) aufweist, ab dem sich radial weg erstreckende Flügelstege (5) in Richtung des Endes erstrecken **und der dabei einen Anschlag am Torsionsdämpfer bildet,**
**dadurch gekennzeichnet, dass**
der Schiebehülsenrohling (1') ein Kaltfließpressbauteil ist, das an dem Abschnitt (6) eine sich über einen Teil der Länge des Abschnitts (6) erstreckende Vorverzahnung (3) aufweist.

2. Kraftfahrzeug-Lenkspindelanordnung, die eine Lenkspindelwelle (10) mit einer Außenverzahnung (11) und eine Schiebehülse (1), in der die Lenkspindelwelle (10) aufnehmbar ist, aufweist, wobei die Schiebehülse (1) eine gehämmerte Innenverzahnung (2) aufweist, die sich von einem ersten Ende der Schiebehülse (1) in Richtung eines nahe dem zweiten Ende vorliegenden Abschnitts (6) erstreckt, der einen Bund (4) aufweist, ab dem sich radial weg erstreckende Flügelstege (5) in Richtung des zweiten Endes erstrecken und **der dabei einen Anschlag am Torsionsdämpfer bildet,**
wobei in einer Einbaulage der Lenkspindelanordnung die gehämmerte Innenverzahnung (2) in dem Kraftfahrzeug mit der Außenverzahnung (11) der Lenkspindelwelle (10) verzahnt ist,
**dadurch gekennzeichnet, dass**
die Schiebehülse über einen Teil der Länge des Abschnitts (6) eine Vorverzahnung (3) aufweist, die in einer Montageposition der Lenkspindelwelle (10) mit der Außenverzahnung (11) verzahnt ist, und wobei
eine Winkelposition, die die Lenkspindelwelle (10) in der Einbaulage durch die Verzahnung eingenommen hat, durch das Überführen der Lenkspindelwelle (10) von der gehämmerten Innenverzahnung (2) in die Vorverzahnung (3) beibehalten wird.

3. Kraftfahrzeug-Lenkspindelanordnung nach Anspruch 2,
**dadurch gekennzeichnet, dass**
die Länge der Außenverzahnung (11) der Lenkspindelwelle (10) so gewählt ist, dass die Lenkspindelwelle (10) beim Überführen von der Einbaulage in die Montageposition ununterbrochen durch die gehämmerte Innenverzahnung (2) und durch die Vorverzahnung (3) der Schiebehülse (1) geführt ist.

4. Kraftfahrzeug-Lenkspindelanordnung nach Anspruch 2,
**dadurch gekennzeichnet, dass**
die Außenverzahnung (11) der Lenkspindelwelle (10) durch eine Kunststoffumspritzung bereitgestellt ist.

5. Kraftfahrzeug-Lenkspindelanordnung nach zumindest einem der Ansprüche 2 bis 4, **dadurch gekennzeichnet, dass**
die Vorverzahnung (3) der Schiebwelle (10) eine Zahngröße aufweist, die einen Toleranzausgleichsspalt zwischen der Vorverzahnung (3) und der Außenverzahnung (11) in der Montageanordnung bereitstellt.

6. Kraftfahrzeug-Lenkspindelanordnung nach zumindest einem der Ansprüche 2 bis 5, **dadurch gekennzeichnet, dass**
die gehämmerte Innenverzahnung (2) und die Vorverzahnung (3) der Schiebehülse (1) zumindest einen Fehlzahn (12) aufweisen und dass
die Außenverzahnung (11) der Lenkspindelwelle (10) zumindest einen Blockzahn aufweist,
wobei die Positionierung des Blockzahns in Bezug zu dem Fehlzahn (12) und in Bezug auf eine vorbestimmte Drehwinkelposition der Lenkspindelwelle (10) gewählt ist.

## Claims

1. Sliding sleeve blank (1') for producing a sliding sleeve (1) for a steering column shaft (10) of a motor vehicle steering column, wherein the sliding sleeve blank (1') has a cylindrical shape and has at one end a section (6) with a collar (4), from which wing webs (5) extending radially away extend towards the end and which forms a stop on the torsion damper, **characterised in that**
the sliding sleeve blank (1') is a cold-impact extruded component which has a pre-toothing (3) extending along a part of the length of the section (6) on the section (6).

2. Motor vehicle steering column assembly comprising a steering column shaft (10) with external toothing (11) and a sliding sleeve (1), in which the steering column shaft (10) can be accommodated, wherein the sliding sleeve (1) has a hammered internal toothing (2) extending from a first end of the sliding sleeve (1) towards a section (6) provided close to the second end and having a collar (4), from which wing webs (5) extending radially away extend towards the second end and which forms a stop on the torsion damper,
wherein, in an installed position of the steering column assembly, the hammered internal toothing (2) in the motor vehicle is interlocked with the external toothing (11) of the steering column shaft (10), **characterised in that**
the sliding sleeve has along a part of the length of the section (6) a pre-toothing (3), which is interlocked with the external toothing (11) in a mounting position of the steering column shaft (10), and wherein
an angular position which the steering column shaft (10) has adopted in the installed position by way of the toothing is maintained by transferring the steering column shaft (10) from the hammered internal toothing (2) into the pre-toothing (3).

3. Motor vehicle steering column assembly according to claim 2, **characterised in that**
the length of the external toothing (11) of the steering column shaft (10) is chosen such that the steering column shaft (10), when being transferred from the installed position into the mounting position, is guided without interruption through the hammered internal toothing (2) and through the pre-toothing (3) of the sliding sleeve (1).

4. Motor vehicle steering column assembly according to claim 2, **characterised in that**
the external toothing (11) of the steering column shaft (10) is provided by plastic moulding.

5. Motor vehicle steering column assembly according to one or more of claims 2 to 4,
**characterised in that**
the pre-toothing (3) of the sliding shaft (10) has a tooth size which provides a tolerance compensation gap between the pre-toothing (3) and the external toothing (11) in the mounting arrangement.

6. Motor vehicle steering column assembly according to one or more of claims 2 to 5,
**characterised in that**
the hammered internal toothing (2) and the pre-toothing (3) of the sliding sleeve (1) comprises at least one faulty tooth (12), and **in that** the external toothing (11) of the steering column shaft (10) comprises at least one block tooth,
wherein the positioning of the block tooth is chosen relative to the faulty tooth (12) and relative to a predetermined rotary angle position of the steering column shaft (10).

## Revendications

1. Ébauche (1') de manchon coulissant destiné à fabriquer un manchon coulissant (1) pour un arbre de direction (10) d'un véhicule automobile, l'ébauche (1') de manchon coulissant présentant une forme cylindrique et présentant à une extrémité une section (6) qui présente un collier (4) à partir duquel des éléments (5) en forme d'aile s'étendant radialement vers l'extérieur en direction de l'extrémité, et qui forme ainsi une butée sur l'amortisseur de torsion, **caractérisée en ce que** l'ébauche (1') de manchon coulissant est un composant d'extrusion à froid qui sur la section (6) présente une taille d'ébauche (3) s'étendant sur une partie de la longueur de la section (6).

2. Système d'arbre de direction de véhicule automobile, qui présente un arbre de direction (10) ayant une taille d'engrenages (11) et un manchon coulissant (1) dans lequel l'arbre de direction (10) peut être logé, le manchon coulissant (1) présentant une taille d'engrenages intérieure (2) martelée, qui s'étend à partir d'une première extrémité du manchon coulissant (1) en direction d'une section (6) présente à proximité de la seconde extrémité, qui présente un collier (4) à partir duquel des éléments (5) en forme d'aile s'étendant radialement s'étendent vers l'extérieur en direction de la seconde extrémité et qui forme ainsi une butée sur l'amortisseur de torsion, dans une position de montage du système d'arbre de direction la taille d'engrenage intérieure (2) martelée est en prise dans le véhicule automobile avec la taille d'engrenages extérieure (11) de l'arbre de direction (10), **caractérisé en ce que** le manchon coulissant présente sur une partie de la longueur de la section (6) une taille d'ébauche (3), qui dans une position de montage de l'arbre de direction (10) est en prise avec la taille d'engrenage extérieure (11), et une position angulaire, qui a mis en prise l'arbre de direction (10) dans la position de montage par la taille d'engrenages, étant maintenue par le transport de l'arbre de direction (10) de la taille d'engrenages intérieure martelée (2) vers la taille d'ébauche (3).

3. Système d'arbre de direction de véhicule automobile selon la revendication 2, **caractérisé en ce que** la longueur de la taille d'engrenages extérieure (11) de l'arbre de direction (10) est sélectionnée de telle sorte que l'arbre de direction (10) soit guidé en continu lors du transport de la position d'installation dans la position de montage par la taille d'engrenages intérieure martelée (2) et par la taille d'ébauche (3) du manchon coulissant (1).

4. Système d'arbre de direction de véhicule automobile selon la revendication 2, **caractérisé en ce que** la taille d'engrenage extérieure (11) de l'arbre de direction (10) est fournie par un moulage par injection de plastique.

5. Système d'arbre de direction de véhicule automobile selon l'une quelconque des revendications 2 à 4, caractérisé en ce la taille d'ébauche (3) de l'arbre coulissant (10) présente une dimension de dent qui fournit un interstice de compensation de tolérance entre la taille d'ébauche (3) et la taille d'engrenage extérieure (11) dans l'ordre de montage.

6. Système d'arbre de direction de véhicule automobile selon l'une quelconque des revendications 2 à 5, caractérisé en ce la taille d'engrenages intérieure martelée (2) et la taille d'ébauche (3) du manchon coulissant présentent au moins une dente manquante (12) et en ce que la taille d'engrenage extérieure (11) de l'arbre de direction (10) présente au moins une dent de bloc, le positionnement de la dent de bloc est sélectionné en fonction de la dent manquante (12) et en fonction d'une position angulaire de rotation prédéfinie de l'arbre de direction (10).
